# EUROPEAN PATENT SPECIFICATION

(11) **EP 4 102 313 B1**
(45) Date of publication and mention of the grant of the patent: **30.07.2025**
(21) Application number: 21178899.7
(22) Date of filing: 11.06.2021
(51) Int. Cl.: G05B 17/02, G05B 19/4069

(54) **SYSTEM AND METHOD FOR DETERMINING OPERATIONAL CONFIGURATION OF AN ASSET**
SYSTEM UND VERFAHREN ZUR BESTIMMUNG DER BETRIEBSKONFIGURATION EINER ANLAGE
SYSTÈME ET PROCÉDÉ PERMETTANT DE DÉTERMINER UNE CONFIGURATION DE FONCTIONNEMENT D'UN ACTIF

(43) Date of publication of application: 14.12.2022
(73) Proprietor: Siemens Aktiengesellschaft, 80333 München (DE)
(72) Inventor: KAMATH, Yogesh, 560076 Bangalore, Karnataka (IN); NAIR, Sudev, 560078 Bangalore, Karnataka (IN)
(74) Representative: HKW Intellectual Property PartG mbB

(56) References cited:
- EP-A1- 3 611 578
- EP-A1- 3 764 183
- WO-A1-2021/052777
- LUO WEICHAO ET AL: "Digital twin for CNC machine tool: modeling and using strategy", JOURNAL OF AMBIENT INTELLIGENCE AND HUMANIZED COMPUTING, SPRINGER BERLIN HEIDELBERG, BERLIN/HEIDELBERG, vol. 10, no. 3, 28 July 2018 (2018-07-28), pages 1129 - 1140, XP036708396, ISSN: 1868-5137, [retrieved on 20180728], DOI: 10.1007/S12652-018-0946-5

## Description

The present invention relates to the field of management of an asset, and more particularly relates to a system, apparatus and method for determining an operational configuration of an asset using digital twin.

Several industrial assets and tools such as machine tools play a crucial role in many industries for machining rigid materials to a suitable form. Machining of a workpiece may be performed through different types of operations such as cutting, milling, shearing and boring. Each of these operations are carried out by a suitable cutting tool attached to a spindle on the machine tool. The operations of the machine tools is based on the configuration of different components and parameters of the machine tool. Therefore, performance of the machine tool is governed by the configuration of different components of the machine tool. The configuration is also based on the nature of the machining operations for which the machine tool is employed. Furthermore, the determination of configurations of components of the machine tool such as combinations of the machine tool, spindle and axes drive motor configuration based on the requirements of an application of machine tool is quite complex. Furthermore, another challenge associated with performance of the assets is the need for continuous monitoring of the performance of the machine tools. EP 3 764 183 A1 discloses a method for managing health condition of at least one rotating system. WO 2021/052777 A1 discloses a method for managing health condition of at least one rotating system.

In light of the above, there exists a need for determining configuration of the asset such that the performance of the asset is optimal based on real-time operational data.

Therefore, it is the object of the present invention to provide a system, apparatus and method for determining a configuration of the asset such that the performance of the asset is optimal. The invention is set out in the appended set of claims. Firstly, the object of the present invention is achieved by a method for determining a configuration of the asset as disclosed herein. The term 'asset' as used herein, may refer to any device, system, instrument or machinery manufactured or used in an industry or any other installation that may be employed for performing an operation. Example of assets include any machinery in a technical system or technical installation/facility such as motors, gears, bearings, shafts, switchgears, rotors, circuit breakers, protection devices, remote terminal units, transformers, reactors, disconnectors, gear-drive, gradient coils, magnet, radio frequency coils etc. Exemplary technical systems include turbines, large drives, Magnetic Resonance Imaging (MRI) scanner, etc. Example facility/technical installation may be a complex industrial set-up with a plurality of assets such as a power plant, wind farm, power grid, manufacturing facility, process plants and so on.

In an exemplary implementation, the asset is a machine tool. The term 'machine tool' as used herein refers to a Computerised Numerical Control (CNC) machine. The CNC machine may be of different types such as CNC milling machines, CNC drilling machines, CNC lathe, CNC turning centers, CNC machining centers, CNC Plasma-Cutting Machine, CNC special-purpose machines and CNC grinders. The CNC machine may include any number of axes. For example, the number of axes may be one of 2, 2.5, 3, 4, 5, axes with additional auxiliary axes. The term 'performance' as used herein, refers to a performance of the machine tool in real-time. In particular, the performance is an instantaneous performance of the asset.

The method comprises receiving a set of operating parameters associated with the asset. The term 'set of operating parameters' include parameter values that are set by an operator. The operating conditions may include, for example, type of machining operation, type of cutting tool, tool settings, Automatic Tool Changer (ATC) settings, feed rate, cutting speed, spindle speed, spindle power, axis torques, axis speeds, axis power, number of strokes per minute for each axis and range of the strokes. Further, the set of operating parameters may also include data associated with G-codes, M-codes and Computer-Aided Design models based on which the machine tool machines a workpiece.

The set of operating parameters may be set by an operator of the machine tool or preset by the OEM of the machine tool. Further, the set of operating parameters may also include non-operational parameters such as specifications of the intended machining job, material testing data associated with a workpiece attached to the machine tool. The one or more components include, but are not limited to, bed, column, spindle, cutting tool, spindle motor, ball-screw, leadscrew, linear motion guide, axis motors and table. Furthermore, the set of operating parameters are set by an operator to determine a configuration for asset such as machine tool in order to determine an optimal configuration of the asset. The term 'configuration' as used herein refers to combinations of one or more components and/or operating parameters of the one or more components of the asset. The configurations may include combinations of torque and power values of a spindle, size of the spindle, number of axes, power of axes, strokes, dimensions of the machine tool and motor ratings and so forth.

The method comprises identifying data associated with the asset based on the received set of operating parameters. Herein, the data is stored in a first knowledge database comprising information pertaining to a first digital twin. The term 'first knowledge database' as used herein refers to a database comprising a plurality of pre-linked data objects indicative of parameters and corresponding responses pertaining to the one or more components of the asset, history of operation of the asset, historical data pertaining to parameter values of the one or more components of the asset, failure predictions and corresponding cause of failures and so forth. The first knowledge database comprises historical operational information, for instance, the information related to machining, loading and related conditions, tooling and fixturing data, and so forth. The first knowledge database may also include linked data objects for correlating various machine types, different types of tools, operating speeds, feed and depths of cut and so forth. The first knowledge database may also include information derived from generic physics-based models including thermal, vibration, proximity, flux, load, current and other sensor data, relating to behaviors of various components of the asset. In addition, the first knowledge database may also comprise domain rules that can be leveraged by the processing unit for subsequent reasoning on a behavior of the asset.

The term 'first digital twin' as used herein refers to dynamic virtual replica based on one or more of physics-based models, Computer-Aided Design (CAD) models, Computer-Aided Engineering (CAE) models, one-dimensional (1D) models, two-dimensional (2D) models, three-dimensional (3D) models, finite-element (FE) models, descriptive models, metamodels, stochastic models, parametric models, reduced-order models, statistical models, heuristic models, prediction models, ageing models, machine learning models, Artificial Intelligence models, deep learning models, system models, knowledge graphs and so on. In one embodiment, the first digital twin of the asset represents a generic replica of the asset which represents a normalized cumulative model for an asset. The first digital twin model may represent a state of the asset capable of representing a number of variants of the asset.

According to an embodiment, the method of identifying data associated with the asset comprises determining a configuration from a plurality of predetermined configurations of the asset based on the set of operating parameters. Herein, each predetermined configuration is associated with a variant of the asset. In an embodiment the method further comprises storing the identified data associated with the variant of the asset in a second knowledge database. Herein the second knowledge database is communicatively coupled to the first knowledge database.

The method further comprises configuring a second digital twin of the asset based on the data identified from the first knowledge database. Herein, the second digital twin depicts a variant of the asset. The term 'second digital twin' as used herein refers to a dynamic virtual replica based on one or more of physics-based models, Computer-Aided Design (CAD) models, Computer-Aided Engineering (CAE) models, one-dimensional (1D) models, two-dimensional (2D) models, three-dimensional (3D) models, finite-element (FE) models, descriptive models, metamodels, stochastic models, parametric models, reduced-order models, statistical models, heuristic models, prediction models, ageing models, machine learning models, Artificial Intelligence models, deep learning models, system models, knowledge graphs and so on In one implementation, the second digital twin is a dynamic virtual replica based on one or more of physics-based models, Computer-Aided Design (CAD) models, Computer-Aided Engineering (CAE) models, one-dimensional (1D) models, two-dimensional (2D) models, three-dimensional (3D) models, finite-element (FE) models, descriptive models, metamodels, stochastic models, parametric models, reduced-order models, statistical models, heuristic models, prediction models, ageing models, machine learning models, Artificial Intelligence models, deep learning models, system models, knowledge graphs and so on. In one embodiment, configuring the second digital twin of the machine tool comprises updating the second digital twin of the machine tool based on the set of operating parameter and operational data. The digital twin of the machine tool is updated to replicate, through simulations, a response substantially similar to a response of the machine tool in real-time. In other words, the digital twin is configured to represent a state of the machine tool in real-time.

Advantageously, the digital twin acts as a soft-sensor that facilitates replicating responses of internal components of the machine tool, that are not measurable using physical sensors.

The term 'variant' as used herein refers to specifications associated with a type and a maximum capacity of the machine tool as provided by an Original Equipment Manufacturer (OEM) of the machine tool. The specifications may include, but are not limited to, torque and power of a spindle, size of the spindle, number of axes, power of axes, strokes, dimensions of the machine tool and motor ratings. Similarly, the specifications also include capacities associated with components of the machine tool, as specified by the OEM.

The method further comprises simulating a behavior of the asset based on the configured second digital twin in a simulation environment. In accordance with an embodiment of the present invention, simulating the behavior of the asset comprises generating a simulation instance based on the configured digital twin. The simulation instance may be a thread of simulation, associated with the simulation model, independent of all other threads during execution. Further, the simulation instance is executed in a simulation environment using a simulation model for generating simulation results indicative of a behavior of the one or more components of the asset. The simulation model may be an analytical model in machine-executable form derived from at least one of a physics-based model, a data-driven model or a hybrid model associated with the machine tool. The simulation model may be a 1-dimensional(1D) model, a 2-dimensional(2D) model, a 3-dimensional(3D) model or a combination thereof. The simulation instance may be executed in the simulation environment as one of stochastic simulations, deterministic simulations, dynamic simulations, continuous simulations, discrete simulations, local simulations, distributed simulations, co-simulations or a combination thereof. It must be understood that the simulation models referred to in the present disclosure may include both system-level models and component-level models associated with the machine tool. In an embodiment, the behavior of the one or more components of the asset is associated with a performance and stability of the machine tool. The performance may be associated with chatter, cutting tool, axis or spindle of the machine tool or an overall structural stability of the machine tool. As the digital twin replicates a real-time behavior of the machine tool, results of the simulation are more accurate compared to conventional techniques of analysis based on sensor data alone.

According to an embodiment, the method further comprises receiving operational data pertaining to the asset. Herein the operational data is indicative of performance of the asset in real-time. The method comprises computing at least one value for the set of operating parameters of the asset based on the received operational data and the second knowledge database. The method comprises executing the simulation instance in the simulation environment to simulate the behavior of the asset based on the computed at least one value for the set of operating parameters of the asset.

In an embodiment, the method further comprises reconfiguring the second digital twin of the asset based on results of the simulation. The method of reconfiguring the second digital twin of the asset based on results of the simulation comprises comparing a simulated performance of the asset from the results of the simulation model to a threshold value. Further, the method comprises identifying the at least one value for the set of operating parameters based on the results of the simulation, if the simulated performance of the asset is above the threshold value. Further, the method comprises reconfiguring the second digital twin of the asset using the identified at least one value of the set of operating parameters. According to an embodiment, the method of determining the operational configuration associated with the variant of the asset based on the results of the simulation comprises identifying the at least one value for the set of operating parameters based on the reconfigured second digital twin. Further, the method comprises determining the operational configuration for the variant of the asset using the at least one value for the set of operating parameters.

In accordance with an embodiment of the present invention, the method further comprises updating the second knowledge database, based on the second digital twin of the asset and results of the simulation model. Further, the method comprises augmenting the updated second knowledge database, to the first knowledge database.

In accordance with an embodiment of the present invention, the method further comprises generating one or more recommendations for determining a configuration of the variant of the asset. In an embodiment, the first digital twin is executed on a cloud server and the second digital twin is executed on an edge server.

The object of the present invention is achieved by an apparatus for optimizing performance of an asset. The apparatus comprises one or more processing units, and a memory unit communicatively coupled to the one or more processing units. The memory unit comprises a performance optimization module stored in the form of machine-readable instructions executable by the one or more processing units. The performance optimization module is configured to perform method steps described above. The execution of the condition management module may also be performed using co-processors such as Graphical Processing Unit (GPU), Field Programmable Gate Array (FPGA) or Neural Processing/Compute Engines. In addition, the memory unit may also include a database.

According to an embodiment of the present invention, the apparatus can be an edge computing device. As used herein "edge computing" refers to computing environment that is capable of being performed on an edge device (e.g., connected to sensing units in an industrial setup and one end and to a remote server(s) such as for computing server(s) or cloud computing server(s) on other end), which may be a compact computing device that has a small form factor and resource constraints in terms of computing power. A network of the edge computing devices can also be used to implement the apparatus. Such a network of edge computing devices is referred to as a fog network.

In another embodiment, the apparatus is a cloud computing system having a cloud computing-based platform configured to provide a cloud service for analyzing condition data of a machine tool. As used herein, "cloud computing" refers to a processing environment comprising configurable computing physical and logical resources, for example, networks, servers, storage, applications, services, etc., and data distributed over the network, for example, the internet. The cloud computing platform may be implemented as a service for analyzing condition data. In other words, the cloud computing system provides on-demand network access to a shared pool of the configurable computing physical and logical resources. The network is, for example, a wired network, a wireless network, a communication network, or a network formed from any combination of these networks.

Additionally, the object of the present invention is achieved by a system for determining an operational configuration of an asset. The system comprises one or more sources capable of providing real-time operational data associated with an asset and an apparatus configured for instantaneous optimizing performance of the asset as described above, communicatively coupled to the one or more sources. The term 'sources' as used herein, refer to electronic devices configured to obtain and transmit the operational data to the apparatus. Non-limiting examples of sources include sensing units, controllers and edge devices.

The object of the present invention is also achieved by a computer program product. The computer-program product can be, for example, a computer program or comprise another element apart from the computer program. This other element can be hardware, for example a memory device, on which the computer program is stored, a hardware key for using the computer program and the like, and/or software, for example a documentation or a software key for using the computer program.

The above-mentioned attributes, features, and advantages of this invention and the manner of achieving them, will become more apparent and understandable (clear) with the following description of embodiments of the invention in conjunction with the corresponding drawings. The illustrated embodiments are intended to illustrate, but not limit the invention.

The present invention is further described hereinafter with reference to illustrated embodiments shown in the accompanying drawings, in which:
- FIG 1A: illustrates a block-diagram of a system for optimizing performance of an asset, in accordance with an embodiment of the present invention;
- FIG 1B: illustrates a block-diagram of an apparatus for optimizing performance of an asset, in accordance with an embodiment of the present invention;
- FIG 2: illustrates a block diagram of a test set-up for building a second digital twin of an asset, in accordance with an embodiment of the present invention;
- FIG 3: depicts a flowchart of an exemplary method for optimizing performance of an asset, in accordance with an embodiment of the present invention;
- FIG 4: depicts a flowchart of an exemplary method for reconfiguring the second digital twin, in accordance with an embodiment of the present invention; and
- FIG 5: depicts a block diagram of an exemplary set-up of a system for determining a configuration of an asset, in accordance with an embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

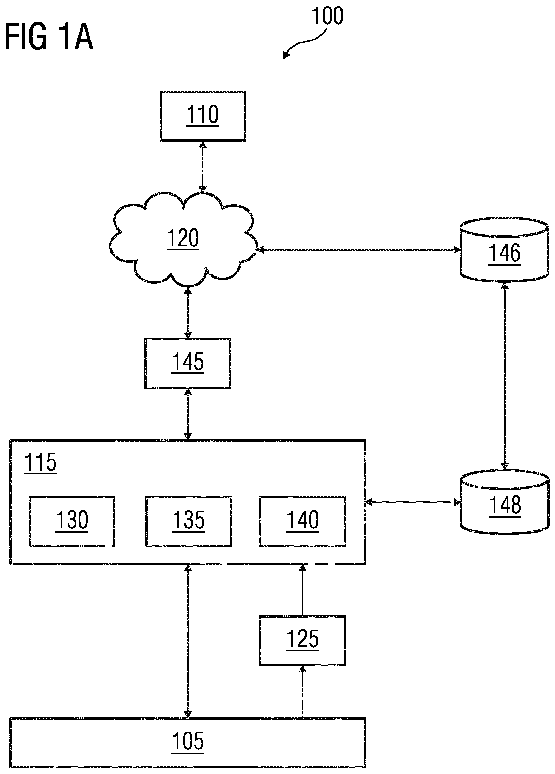

FIG 1A illustrates a block-diagram of a system 100 for optimizing performance of an asset 105, in accordance with an embodiment of the present invention. The system 100 comprises an apparatus 110 communicatively coupled to a controller 115 associated with the asset 105, through a network 120. The apparatus 110 is an edge computing device. It must be understood by a person skilled in the art the apparatus 110 may be communicatively coupled to a plurality of controllers, in a similar manner. Each controller 115 may be associated with one or more assets. The term 'asset' as used herein, may refer to any device, system, instrument or machinery manufactured or used in an industry or any other installation that may be employed for performing an operation. Example of assets include any machinery in a technical system or technical installation/facility such as motors, gears, bearings, shafts, switchgears, rotors, circuit breakers, protection devices, remote terminal units, transformers, reactors, disconnectors, gear-drive, gradient coils, magnet, radio frequency coils etc. Exemplary technical systems include turbines, large drives, Magnetic Resonance Imaging (MRI) scanner, etc. Example facility/technical installation may be a complex industrial set-up with a plurality of assets such as a power plant, wind farm, power grid, manufacturing facility, process plants and so on. Herein, the controller 115 may enable an operator of the asset 105 to define set of operating parameters for performing an operation. In an exemplary implementation, the asset 105 is a machine tool 105 and the operator of the machine tool 105 is configured to define the set of operating parameters for performing a machining operation. It will be appreciated that hereinafter, the embodiments of the present invention are described in detail with respect to a machine tool. However, the description of the machine tool is only an exemplary implementation among other assets (as aforementioned) and should not unduly limit the scope of claims appended herein.

As may be understood by a person skilled in the art, the set of operating parameters may be defined by an operator before starting a machining operation of the machine tool 105. For example, the set of operating parameters correspond to type of machining operation, type of cutting tool, tool settings, Automatic Tool Changer settings, feed rate, cutting speed, G-codes, M-codes and material testing data associated with a workpiece mounted on the machine tool 105. The controller 115 may be further communicatively coupled to one or more sensing units 125 associated with the machine tool 105. The one or more sensing units 125 The one or more sensing units 125 include at least one of a position sensor, accelerometer, rotary encoder, dynamometer, current sensor, thermistor, acoustic sensor and image sensor.

In an example, the position sensor is configured for determining a linear position of the workpiece mounted on the machine tool 105. In another example, the accelerometer is configured for measuring vibrations at one or more locations on the machine tool 105. In the present embodiment, the accelerometer is installed on a structure of the machine tool 105 for measuring vibrations. The rotary encoder is configured for measuring number of rotations of a spindle on the machine tool 105. The dynamometer is configured for measuring a cutting force associated with a cutting tool on the machine tool 105. The current sensor is configured for measuring current associated with a servo mechanism that controls motion of the spindle of the machine tool 105. The thermistor is configured for measuring temperature at one or more locations on the machine tool 105. The acoustic sensor is configured for measuring a noise level generated by the machine tool 105. The image sensor is configured to capture images of the cutting tool for determining tool wear. Notably, data entered by the operator such as the set of operating parameters is static data and the operational data acquired by the one or more sensing units 125 in real-time is dynamic data. Advantageously, the second digital twin is built based on both static data and dynamic data that is capable of accurately determining optimal configuration for the machine tool 105.

The controller 115 comprises a trans-receiver 130, one or more processors 135 and a memory 140. The trans-receiver 130 is configured to connect the controller 115 to a network interface 145 associated with the network 120. The controller 115 transmits static data and dynamic data to the apparatus 110 in through the network interface 145. The static data includes the set of operating parameters of the machine tool 105 and the dynamic data includes operational data received from the one or more sensing units 125.

The system 100 comprises a first knowledge database 146 communicatively coupled to the apparatus 110 associated with the asset 105, through the network 120. The first knowledge database 146 comprises a plurality of pre-linked data objects indicative of parameters and corresponding responses pertaining to the one or more components of the asset, history of operation of the asset, historical data pertaining to parameter values of the one or more components of the asset, failure predictions and corresponding cause of failures and so forth. The first knowledge database 146 comprises historical operational information, for instance, the information related to machining, loading and related conditions, tooling and fixturing data, and so forth. The first knowledge database 146 may also include linked data objects for correlating various machine types, different types of tools, operating speeds, feed and depths of cut and so forth. The first knowledge database 146 may also include information derived from generic physics-based models including thermal, accelerometer, proximity, flux, load, current and other sensor data, relating to behaviors of various components of the asset. In an example, the first knowledge database 146 may be based on the first digital twin of the asset. The first digital twin is a generic digital twin of the asset 105. By 'generic' is meant that the first digital twin is not an accurate model for a particular variant of the asset. The first digital twin represents a generic behavior of the asset. The data from the behavior of the one or more components of the asset such as the machine tool and corresponding physics-based models is extracted from the first digital twin and stored in the form of linked data objects in the first knowledge database 146.

The apparatus 110 may be a (personal) computer, a workstation, a virtual machine running on host hardware, a microcontroller, or an integrated circuit. As an alternative, the apparatus 110 may be a real or a virtual group of computers (the technical term for a real group of computers is "cluster", the technical term for a virtual group of computers is "cloud").

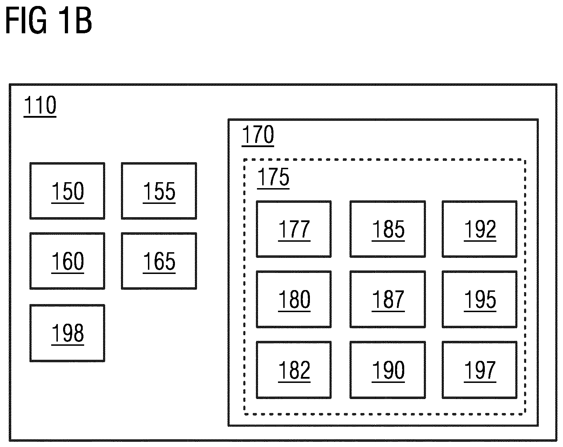

The apparatus 110 includes a communication unit 150, one or more processing units 155, a display 160, a Graphical User Interface (GUI) 165 and a memory unit 170 communicatively coupled to each other as shown in FIG 1B. In one embodiment, the communication unit 150 includes a transmitter (not shown), a receiver (not shown) and Gigabit Ethernet port (not shown). The memory unit 170 may include 2 Giga byte Random Access Memory (RAM) Package on Package (PoP) stacked and Flash Storage. The one or more processing units 155 are configured to execute the defined computer program instructions in the modules. Further, the one or more processing units 155 are also configured to execute the instructions in the memory unit 170 simultaneously. The display 160 includes a High-Definition Multimedia Interface (HDMI) display and a cooling fan (not shown). Additionally, control personnel may access the apparatus 110 through the GUI 165. The GUI 165 may include a web-based interface, a web-based downloadable application interface, and so on.

The processing unit 155, as used herein, means any type of computational circuit, such as, but not limited to, a microprocessor, microcontroller, complex instruction set computing microprocessor, reduced instruction set computing microprocessor, very long instruction word microprocessor, explicitly parallel instruction computing microprocessor, graphics processor, digital signal processor, or any other type of processing circuit. The processing unit 155 may also include embedded controllers, such as generic or programmable logic devices or arrays, application specific integrated circuits, single-chip computers, and the like. In general, a processing unit 155 may comprise hardware elements and software elements. The processing unit 155 can be configured for multithreading, i.e. the processing unit 155 may host different calculation processes at the same time, executing the either in parallel or switching between active and passive calculation processes.

The memory unit 170 may be volatile memory and non-volatile memory. The memory unit 170 may be coupled for communication with the processing unit 155. The processing unit 155 may execute instructions and/or code stored in the memory unit 170. A variety of computer-readable storage media may be stored in and accessed from the memory unit 170. The memory unit 170 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

The memory unit 170 further comprises a configuration determination module 175 in the form of machine-readable instructions on any of the above-mentioned storage media and may be in communication to and executed by the processing unit 155. The configuration determination module 175 further comprises a preprocessing module 177, a data extraction module 180, a digital twin module 182, a simulation module 185, a predetermined configuration selection module 187, an optimization module 190, a knowledge base generation 192, a recommendation 195 and a notification module 197. The apparatus 110 may further comprise a storage unit 198. The storage unit 198 may include a database comprising operational or performance logs associated with all the machine tools communicatively coupled to the apparatus 110. The following description explains functions of the modules when executed by the processing unit 155.

The preprocessing module 177 is configured for preprocessing set of operating parameters entered by the operator of the asset and operational data as received from the controller 115. The preprocessing of the set of operating parameters and the operational data may comprise different steps for preparing the set of operating parameters and the operational data for further processing. The different steps in preprocessing may include, but not limited to, data cleaning, data normalization, data selection and so on.

The data extraction module 180 is configured for identifying data associated with the asset 105 based on the received set of operating parameters. The data extraction module 180 is configured for determining a configuration from a plurality of predetermined configurations of the asset 105 based on the set of operating parameters.

The digital twin module 182 configures a second digital twin of the asset 105 based on the data identified from the first knowledge database 146. The digital twin module 182 continuously calibrates the digital twin of the asset 105 to replicate substantially similar responses of the asset 105 in real-time, upon simulation. In other words, the digital twin is calibrated to ensure a certain degree of fidelity with the asset 105.

The simulation module 185 is configured for simulating a behavior of the one or more components of the asset 105 based on the configured digital twin in a simulation environment.

The predetermined configuration selection module 187 is configured for selecting a predetermined configuration from the first knowledge database 146. The parameters of the selected predetermined configuration overlaps with the operating parameters associated with the variant of the asset 105 based on results of the simulation.

The optimization module 190 is configured for tuning the parameters of the predetermined configuration based on the results of the simulation.

The recommendation module 192 is configured for generating recommendations of the configurations for the variant of the asset based on the simulation model.

The notification module 197 is configured for generating notifications indicating operational configuration values. Further, the notification module 197 is also configured for generating notifications indicating recommendations generated by the recommendation module 192. Furthermore, the recommendation module 192 is configured for generating notifications indicating scheduled maintenance activities for the asset 105, as well as periodic reminders for the maintenance activities.

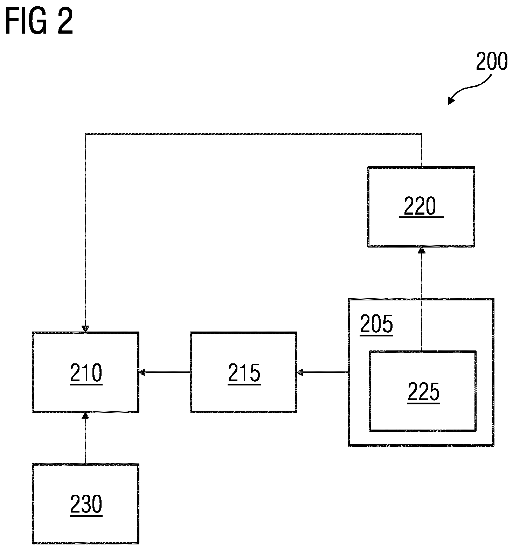

FIG 2 illustrates a block diagram of a test set-up 200 for building a digital twin of an asset 205, in accordance with an embodiment of the present invention. In the present embodiment, the asset 205 is a machine tool 205 and in particular a CNC machining center. The CNC machining center is a three-axis machine comprising a spindle attached to a tool holder. The tool holder holds cutting tools required for machining a workpiece. Similarly, positioning of the workpiece with respect to the cutting tool along an axis is enabled by a ball screw and a linear motion (LM) guide.

The test-set up 200 comprises an apparatus 210 (similar to apparatus 110) communicatively coupled to a controller 215 (similar to controller 115) of the machine tool 205. The controller 215 is configured to provide real-time operational data to the apparatus 210 as explained earlier using FIG 1A. The apparatus 210 is further communicatively coupled to at least one sensing unit 220. In one embodiment, the sensing unit 220 may be communicatively coupled to the apparatus 210 through the controller 215. The apparatus 210 may be further communicatively coupled to a knowledge database 230 (similar to first knowledge database 146). The knowledge database 230 may be configured to store pre-linked data objects indicative of parameters and corresponding responses pertaining to the one or more components of the asset 205, historical data and data relating to physic-based models of the asset 205. The knowledge database 230 may store a plurality of predetermined configurations of the asset 205. Each of the predetermined configuration corresponds to a variant of the asset 205.

In particular, the knowledge database 230 may include metadata associated with the machine tool 205, historical data associated with the machine tool 205 and a model of the machine tool 205. The metadata may include specifications provided by an OEM of the machine tool 205 that determine a type and maximum capacity of the machine tool 205. Non-limiting examples of specifications for a CNC machining center include dimensions, height of centers, center distance, swing over bed, slide travel, spindle bore, spindle nose, taper in nose, metric thread pitches, power and torque of spindle, power of axes and motor ratings. The metadata further comprises physical and mechanical properties associated with different components of the CNC machining center. Non-limiting examples of such properties include dimensions, conductivity, elasticity, density, coefficient of expansion, yield strength, tensile strength, fatigue strength, shear strength and toughness. The knowledge database 230 may also include historical data. The historical data may comprise historic information related to performance, maintenance, and health condition of the machine tool 205. The model of the machine tool 205 is a hybrid model based on at least one machine-learning model and at least one physics-based model associated with the machine tool 205. The hybrid model correlates the set of operating parameters and the real-time operational data from the controller 215 to a state of the machine tool 205 in real-time based on the metadata and the historic data. In other words, the outputs of the at least one machine learning model and the at least one physics-based model at any given instance indicate the state of the machine tool 205 in real-time. In the present embodiment, the hybrid model of the machine tool 205 comprises at least one machine learning model and one or more physics-based models. The machine learning model includes is trained using simulation data generated by a dynamic simulation model.

The dynamic simulation model comprises a plurality of simulation models interconnected to model a dynamic nature of the machine tool 205. In the present embodiment, the dynamic simulation model comprises 3D simulation models and 1D simulation models. The 3D simulation models are used for modelling contact physics between components of the machine tool 205, whereas 1D simulation models are used for modelling the components of the machine tool 205. The 1D simulation models comprise at least one of mass-spring-damper models and lumped mass models corresponding to the components of the machine tool 205. The dynamic simulation model is further configured based on the operational data from the controller 215.

The configured dynamic simulation model is executed through co-simulation in a suitable simulation environment, in order to generate simulated values corresponding to performance, efficiency and stability in the at least one component 225 of the machine tool 205. For example, the simulated values are generated as performance and efficiency profiles corresponding to the at least one component 225. Similarly, simulated values of vibration are generated for different operational conditions of various variants of the machine tool 205. The simulated values corresponding to performance is further used to train the machine learning model, using a supervised learning algorithm, dynamic bayesian networks to predict values of the operating parameters based on the static data and dynamic data. However, it must be understood that the machine learning model may be trained using other techniques including but not limited to, unsupervised learning algorithms, deep learning algorithms and reinforcement learning.

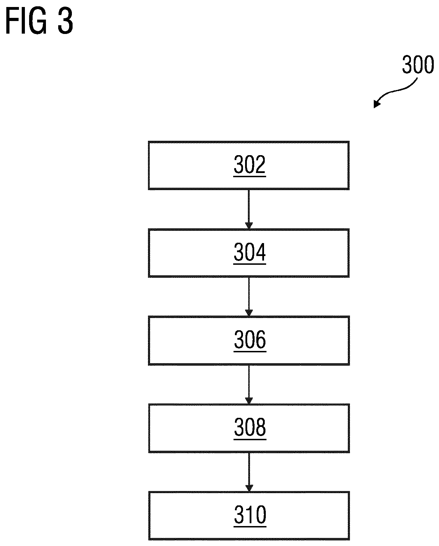

FIG 3 depicts a flowchart of an exemplary method 300 for determining a configuration of an asset, in accordance with an embodiment of the present invention.

At step 302, the set of operating parameters associated with the asset 105 are received. For example, the set of operating parameters correspond to initial operating conditions of the machine tool 105 as received from a controller of the machine tool 105 in real-time. The set of operating parameters may correspond to, for example, type of machining operation, type of cutting tool, feed rate, cutting speed, spindle power, axis torques, axis speeds, spindle speed, number of strokes per minute for each axis and range of the strokes. In addition, the set of operating parameters may also include specifications associated with the machine tool 105 and material testing data associated with the workpiece. The set of operating parameters may be set by the operator of the machine tool 105 or preset by the OEM of the machine tool 105. Based on the specifications and control parameters such as cutting speed, feed rate and depth of cut, a maximum performance of the machine tool is computed. For example, the maximum performance indicates an ideal cycle time required for completion of machining on the workpiece. In another example, the maximum performance an accuracy of machining.

At step 304, the data associated with the asset 105 is identified based on the received set of operating parameters. Herein, the data is stored in the first knowledge database 146 comprising information pertaining to the first digital twin. The received set of operating parameters such as type of machining operation, type of cutting tool, tool settings, Automatic Tool Changer (ATC) settings, feed rate, cutting speed, spindle speed, spindle power, axis torques, axis speeds, axis power, and so forth may be compared with the data stored in the first knowledge database 146 to identify the data substantially similar to that of the given machine tool 105. The first digital twin of the machine tool 105 represents a generic replica of the machine tool 105 which represents a normalized cumulative model for the machine tool 105. The first digital twin model may represent a state of the machine tool 105 capable of representing a number of variants of the machine tool 105. In an embodiment, the first knowledge database 105 comprises historical operational information, for instance, the information related to machining, loading and related conditions, tooling and fixturing data, and so forth. The first knowledge database 105 may also include linked data objects for correlating various machine types, different types of tools, operating speeds, feed and depths of cut and so forth. The first knowledge database 105 may also include information derived from generic physics-based models including thermal, accelerometer, proximity, flux, load, current and other sensor data, relating to behaviors of various components of the machine tool 105. In a preferred embodiment, the first knowledge database 146 may comprises a plurality of predetermined configurations. The predetermined configurations may comprise some standard configurations for the machine tool 105.

In an embodiment, the data associated with the machine tool 105 is identified from the first knowledge database 146. In a preferred embodiment, the method comprises determining a configuration from a plurality of predetermined configurations of the machine tool 105 based on the set of operating parameters. For example, configuration of the machine tool 105 comprises combinations of one or more components and/or operating parameters of the one or more components of the machine tool 105. The configuration may include combinations of torque and power values of a spindle, size of the spindle, number of axes, power of axes, strokes, dimensions of the machine tool and motor ratings and so forth. The data identified from the first knowledge database 146 may include determining parameters and corresponding values of a particular configuration substantially similar to that of the received set of operating parameters. Herein, each predetermined configuration is associated with a variant of the machine tool 105. It will be appreciated that the configuration determined herein may not be the optimal configuration for the machine tool 105. Moreover, the determined configuration is a standard configuration which is used as a basis for configuring a second digital twin as explained in detail in step 306. According to an embodiment, the identified data associated with the variant of the machine tool 105 is stored in a second knowledge database 148. The second knowledge database 148 is communicatively coupled to the first knowledge database 146.

At step 306, a second digital twin of the machine tool is configured based on the data identified from the first knowledge database 146. Herein, the second digital twin depicts a variant of the machine tool 105. In a preferred embodiment, the second digital twin represents a real-time state of the machine tool for the variant of the asset. In particular, the second digital twin represents a replica for the specifications associated with a type and a maximum capacity of the machine tool 105 as provided by an Original Equipment Manufacturer (OEM) of the machine tool 105. The specifications may include, but are not limited to, torque and power of a spindle, size of the spindle, number of axes, power of axes, strokes, dimensions of the machine tool and motor ratings. Similarly, the specifications also include capacities associated with components of the machine tool, as specified by the OEM. It will be appreciated that the second digital twin is derived from the first digital twin based on the data identified from the first knowledge database 146. Advantageously, the second digital twin may not be generated from on initial stage for each variant of the asset. Notably, a configuration may be identified from the first knowledge database 146 which can be used to tune parameters in the first digital twin. Subsequently, the second digital twin is configured based on the configuration identified from the first knowledge database 146. Advantageously, such a method provides scalability of the invention in terms of deriving the second digital twin from the first digital twin having eliminated the need for rebuilding a digital twin for each variant of the asset 105.

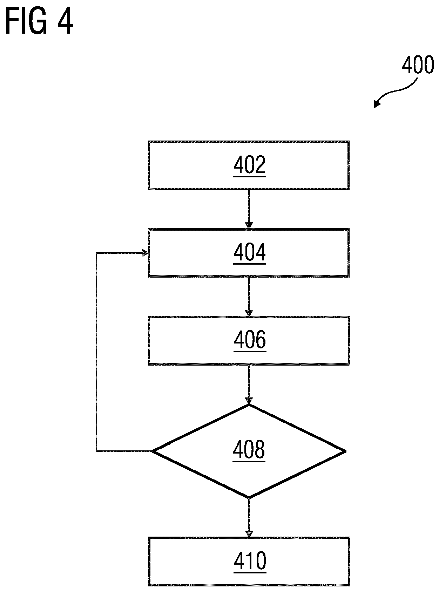

At step 308, a behavior of the machine tool 105 is simulated based on the configured second digital twin in a simulation environment. For example, the behavior may be associated with a performance of the machine tool. In order to simulate the behavior, at first, a simulation instance is generated based on the configured second digital twin. The simulation instance represents a machine-readable state of the machine tool 105 corresponding to the configured second digital twin. It will be appreciated that the simulation of the configured second digital twin is initiated with static data and is continuously updated with dynamic data as obtained from one or more sensing units 125. In a preferred embodiment, a first simulation instance is generated based on the static data i.e. the set of operating parameters. Furthermore, second simulation instance, third simulation instance and so forth may be generated based on the dynamic data i.e. operational data received in real-time. The multiple simulation instances may be generated corresponding to operational data of the machine tool 105. In the present example, the operational data may correspond to performance data and condition data at different instances of time. The configured second digital twin may be reconfigured based on the operational data as explained later in FIG. 4.

At step 310, an operational configuration associated with the variant of the machine tool 105 is determined based on results of the simulation. In one embodiment, at least one value for the set of operating parameters is identified from the reconfigured second digital twin. In one embodiment, the value of the operating parameter is computed using an optimization algorithm. In an example, the optimization algorithm is a multivariable optimization algorithm that optimizes multiple operating parameters for maximizing the performance of the machine tool 105. Further, the operational configuration is determined for the variant of the machine tool 105 using the at least one value for the set of operating parameters. The operational configuration is determined based on optimal set of operating parameters from the reconfigured second digital twin having an improved performance for the variant of the machine tool 105.

At step 312, the performance of the machine tool is optimized using the operational configuration. The operational configuration and corresponding computed value of the operating parameter is applied to operate the machine tool 105. More specifically, the computed values of the operating parameters of the operational configuration are set on the controller of the machine tool 105.

FIG 4 is a flowchart of an exemplary method 400 for reconfiguring the second digital twin, in accordance with an embodiment of the present invention.

At step 402, operational data for the machine tool 105 is received. The operational data may be received from one or more sources associated with the machine tool 105. The operational data is indicative of the performance of the machine tool 105 in real-time. The one or more sources may include, but are not limited to, a controller of the machine tool 105, sensing units and an edge device. The sensing units include, but are not limited to, position sensors, rotary encoders, dynamometers, proximity sensors, current sensors, accelerometers, temperature sensors and acoustic sensors. The real-time condition data is indicative of one or more operating conditions of the machine tool in real-time. The operational data may be associated with sensor data, operating conditions and specifications of the machine tool.

At step 404, at least one value for the set of operating parameters of the machine tool 105 are computed based on the received operational data and the second knowledge database 148. In one embodiment, the value of the operating parameter is computed using an optimization algorithm. In an example, the optimization algorithm is a multivariable optimization algorithm that optimizes multiple operating parameters for maximizing the performance of the machine tool 105.

At step 406, the simulation instance is executed in a simulation environment using a simulation model. The simulation model instance is executed in the simulation environment to simulate the behavior of the machine tool 105 based on the computed at least one value for the set of operating parameters of the machine tool 105. Here, the simulation model correlates a state of the machine to a performance of the machine. The simulation environment may be provided by different computer-aided simulation tools. In the present embodiment, the simulation instances are executed through co-simulations of the 1D simulation model and the 3D simulation model. Upon execution, simulation results are generated corresponding to each of the simulation instances. The simulation results indicate the performance of the machine tool corresponding to each of the simulation instances.

At step 408, a simulated performance of the machine tool 105 from the results of the simulation model is compared to a threshold value. The threshold value may be predefined by the operator of the machine tool 105. For example, the operator may specify that the cycle time may not exceed 10 minutes. If the simulated performance is lesser than the threshold value, step 404 is repeated in order to fine tune the values for the set of operating parameters. Otherwise, step 410 is performed.

At step 410, the second digital twin of the machine tool 105 is reconfigured. The reconfigured second digital twin is the basis for determining operational configuration for the variant of the machine tool 105.

In one embodiment, the second knowledge database 148 is updated based on the reconfigured second digital twin of the machine tool 105. The data objects of the second knowledge database 148 may be modified or created based on the reconfigured second digital twin. In an example, the operational configuration and corresponding values for the operating parameters pertaining to the variant of the machine tool 105 may be extracted from the reconfigured second digital twin to update the second knowledge database 148. Further, the second knowledge database 148 is augmented to the first knowledge database 146. It will be appreciated that the first knowledge database 146 is highly scalable as knowledge obtained for a particular variant of the machine tool 105 is constantly updated in the first knowledge database 146 for future reference.

In one embodiment, the apparatus 110 may generate recommendations for optimizing the performance of the machine tool 105. In one embodiment, the recommendations may be generated based on information stored in the second knowledge database 148. The second knowledge database 148 may be queried using a graphy query language. The query may be based on keywords corresponding to the impact on the performance of the machine tool, the defect, a part number of the defective component etc. Based on the query, one or more responses are returned from the second knowledge database 148. The one or more responses correspond to recommendations for optimizing the performance of the variant of the machine tool 105.

In another embodiment, a remaining useful life (RUL) model may be generated based on the reconfigured second digital twin and the second knowledge database 148. The RUL model determines a remaining operating life of the machine tool based on the performance of the machine tool 105. In an embodiment, simulation assisted Failure Mode and Effects Analysis (FMEA) may be performed in order to determine the remaining useful of one or more components of the machine tool 105 based on the second digital twin. Based on the RUL, a failure time of the machine tool 105 is determined. Furthermore, maintenance activities for the machine tool 105 may be scheduled based on the RUL estimation. The maintenance activity may be scheduled based on analysis of the performance of the machine tool 105 and also based on preferences predefined by an operator of the machine tool 105. For example, if the performance of the machine tool is 105 degrading frequently, a maintenance activity may be scheduled. Further, the schedule for the maintenance activity may be notified to the operator, for example, on a Human Machine Interface (HMI) associated with the machine tool. Further, periodic warning messages may be shown on the HMI in order to perform the maintenance activity.

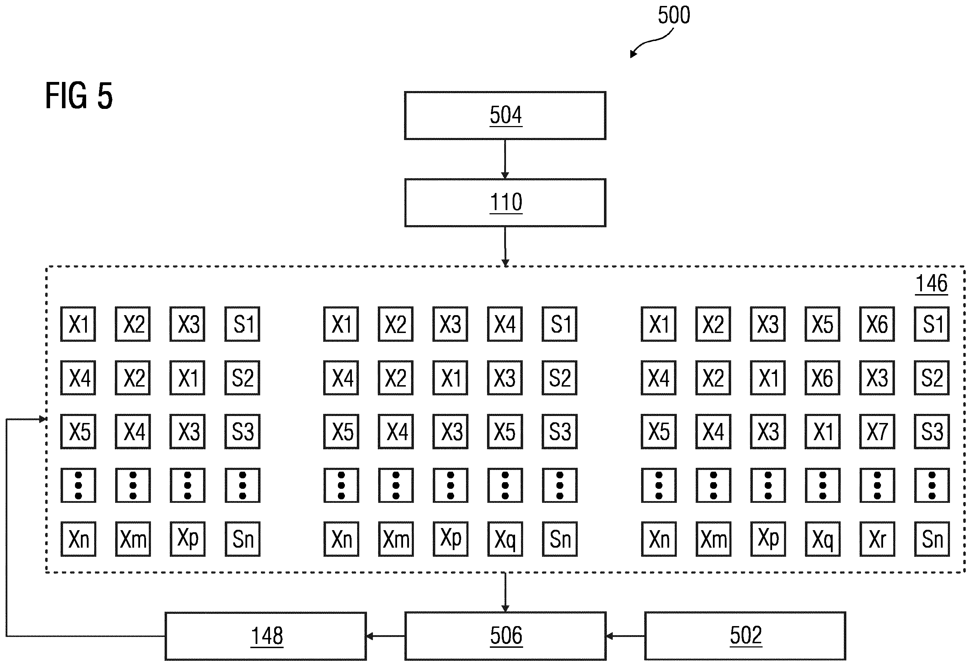

FIG 5 is a block diagram of an exemplary set-up of a system 500 for determining a configuration of the asset 502, in accordance with an embodiment of the present invention. In the present embodiment, the asset 502 is a CNC machining center. The CNC machining center can be a 3 axes machine, 4 axes machine or 5 axes machine based on a functionality of the machine. For the present example, let us consider the asset 502 to be a 3 axes machining center.

The set-up comprises the apparatus 110 communicatively coupled to a first digital twin 504 and the first knowledge base 146. The first digital twin 504 is a generic digital twin of a CNC machining center. The first digital twin 504 represents a generic behavior of the CNC machining center. The apparatus 110 extracts information pertaining to generic behavior of the CNC machining center, corresponding physics-based models and historical data. The extracted information is then stored in the first knowledge base 146 in the form of linked data objects. Furthermore, the first knowledge base 146 may store a plurality of predetermined configurations of the asset 502. Each of the predetermined configuration corresponds to a variant of the asset 502. As shown, the fist knowledge base stores different configurations of 3 axes machining center, 4 axes machining center and 4 axes machining center respectively. For example, the predefined configurations for the 3 axes machining center may be (X₁, X₂, X₃; S₁), wherein X₁ is the torque on first axis, X₂ is the torque on second axis and X₃ is the torque on third axis, and S₁ is the spindle power. Similarly, several combinations of different values of spindle power and axis torque for 3 axes machining center are stored in the first knowledge base 146. In another example, the predefined configurations for the 4 axes machining center may be (X₁, X₂, X₃, X₄,; S₁), wherein X₁ is the torque on first axis, X₂ is the torque on second axis and X₃ is the torque on third axis, X₄ is the torque on fourth axis and S₁ is the spindle power. Similarly, several combinations of different values of spindle power and axis torque for 4 axes machining center are stored in the first knowledge base 146. In another example, the predefined configurations for the 5 axes machining center may be (X₁, X₂, X₃, X₄, X₅; S₁), wherein X₁ is the torque on first axis, X₂ is the torque on second axis and X₃ is the torque on third axis, X₄ is the torque on fourth axis, X₅ is the torque on fifth axis and S₁ is the spindle power. Similarly, several combinations of different values of spindle power and axis torque for 5 axes machining center are stored in the first knowledge base 146. are stored in the first knowledge base 146.

Notably, the predetermined configurations may be some standard configurations for CNC machining center 502 that serve as initialization parameters for a second digital twin 506. In an example, an optimal configuration for the CNC machining center 502 is requested by an operator by providing a set of operating parameters for the machining center such as desired speed, desired feed rate, desired use of application and so forth. The apparatus 110 queries the first knowledge base 146 and determines a standard configuration from the plurality of stored configurations. In an example, the configuration (X₄, X₂, X₁; S₁) is determined as a closest match to the operating parameters of the 3 axes CNC machining center 502 based on the desired speed, desired feed rate, desired use of application provided by the operator. The values from the selected configuration are then used to configure the second digital twin 506. The second digital twin 506 depicts the variant of the machining center 502. The second digital twin 506 represents a replica for the specifications associated with a type and a maximum capacity of the machining center 502 as provided by an Original Equipment Manufacturer (OEM). Furthermore, the configured second digital twin 506 is simulated in a simulation environment based on selected predefined configuration. In an example, the second digital twin 506 is deployed on the edge and the results of the simulation are iteratively updated based on dynamic input data as received from the one or more sensing units in real-time. The dynamic data is the operational data such as input power, output spindle power, axis torque values and so forth. Such operational data is used to update the second digital twin 506 and reconfigure the second digital twin 506 in order to obtain optimal configuration for the machining center 502. Furthermore, operational configuration and corresponding values for the operating parameters pertaining to the variant of the machining center 502 may be extracted from the reconfigured second digital twin to update the second knowledge database 148. Further, the second knowledge database 148 is augmented to the first knowledge database 146. It will be appreciated that the first knowledge database 146 is highly scalable as knowledge obtained for a particular variant of the machining center 502 is constantly updated in the first knowledge database 146 for future reference.

The present invention aims to determine the right configuration for a particular variant of the asset. Furthermore, the invention provides a system and a method to determine an optimal configuration for an asset based on a specific or instantaneous digital twin model (or referred to as second digital twin above) derived for the particular variant of the asset. It should be noted that the generic digital twin model (or referred to as first digital twin above) of the asset is not used to determine configuration, rather a specific or instantaneous digital twin is configured for accurately determining the right configuration for the asset. Furthermore, it should be noted that the configuration of specific digital twin is not complex for the user, as the system automatically generates the specific digital twin on the basis of generic digital twin by leveraging the information structured in the first knowledge database. Another advantage of the present invention is that the system is highly scalable, and hence the accurate determination of configuration is not limited to only a particular set of machine tools. The invention disclosed herein can be extended to a plurality of variants of the asset, irrespective of number of axes, input power, area of application etc. It will be appreciated that the embodiments of the present invention enable users to receive the right configuration in an inexpensive, time efficient and with minimum industrial knowledge or expertise in the relevant filed.

The present invention is not limited to a particular computer system platform, processing unit, operating system, or network. One or more aspects of the present invention may be distributed among one or more computer systems, for example, servers configured to provide one or more services to one or more client computers, or to perform a complete task in a distributed system. For example, one or more aspects of the present invention may be performed on a client-server system that comprises components distributed among one or more server systems that perform multiple functions according to various embodiments. These components comprise, for example, executable, intermediate, or interpreted code, which communicate over a network using a communication protocol. The present invention is not limited to be executable on any particular system or group of system, and is not limited to any particular distributed architecture, network, or communication protocol.

While the invention has been illustrated and described in detail with the help of a preferred embodiment, the invention is not limited to the disclosed examples. Other variations can be deducted by those skilled in the art without leaving the scope of protection of the claimed invention.

### LIST OF REFERENCE NUMBERS

- 100: system for fault prediction and management of an asset
- 105: asset
- 110: apparatus
- 115: controller
- 120: network
- 125: one or more sensing units
- 130: transceiver
- 135: one or more processors
- 140: memory
- 145: network interface
- 146: first knowledge database
- 148: second knowledge database
- 150: communication unit
- 155: one or more processing units
- 160: display
- 165: graphical user interface
- 170: memory unit
- 175: configuration determination module
- 177: preprocessing module
- 180: data extraction module
- 182: digital twin module
- 185: simulation module
- 187: predetermined configuration selection module
- 190: optimization module
- 192: knowledge base generation module
- 195: recommendation module
- 197: notification module
- 198: storage unit
- 200: test set-up
- 205: asset
- 210: apparatus for generating asset simulation data
- 215: controller
- 220: at least one sensing unit
- 225: at least one component
- 230: knowledge database
- 300: method for optimizing performance of an asset
- 400: method for reconfiguring the second digital twin
- 500: exemplary set-up of a system
- 502: asset
- 504: first digital twin
- 506: second digital twin

## Claims

1. A method of determining an operational configuration of an asset (105, 205, 502), wherein the asset (105, 205, 502) refers to a device, a system, an instrument or a machinery manufactured or used in an industry or any other installation employed for performing an operation, the method comprising:
receiving, by a processing unit (155), a set of operating parameters associated with the asset (105, 205, 502), wherein the set of operating parameters correspond to initial operating conditions of the asset (105, 205, 502);
identifying data associated with the asset (105, 205, 502) based on the received set of operating parameters, wherein the data associated with the asset (105, 205, 502) is stored in a first knowledge database (146) comprising information pertaining to a first digital twin (504) of the asset (105, 205, 502), wherein the first digital twin (504) represents a generic replica of the asset (105, 205, 502) which represents a normalized cumulative model for an asset (105, 205, 502);
configuring a second digital twin (506) of the asset (105, 205, 502) based on the data identified from the first knowledge database (146), wherein the second digital twin (506) of the asset (105, 205, 502) is derived from the first digital twin (504) based on the data identified from the first knowledge database (146) and depicts a variant of the asset (105, 205, 502);
simulating a behavior of the asset (105, 205, 502) based on the configured second digital twin (506) of the asset (105, 205, 502) in a simulation environment; and
determining the operational configuration associated with the variant of the asset (105, 205, 502) based on results of the simulation.

2. The method according to claim 1, wherein identifying the data associated with the asset (105, 205, 502) comprises:
determining a configuration from a plurality of predetermined configurations of the asset (105, 205, 502) based on the set of operating parameters, wherein each predetermined configuration is associated with a variant of the asset (105, 205, 502).

3. The method according to claim 2, further comprising:
storing the identified data associated with the variant of the asset (105, 205, 502) in a second knowledge database (148), wherein the second knowledge database (148) is communicatively coupled to the first knowledge database (146).

4. The method according to any of the preceding claims, wherein simulating the behavior of the asset (105, 205, 502) based on the second digital twin (506) in the simulation environment comprises:
generating a simulation instance based on the configured second digital twin (506); and
executing the simulation instance in a simulation environment using a simulation model for generating simulation results indicative of a behavior of one or more components of the asset (105, 205, 502).

5. The method according to claim 4, further comprising:
receiving, by a processing unit (155), operational data pertaining to the asset (105, 205, 502), wherein the operational data is indicative of performance of the asset (105, 205, 502) in real-time;
computing at least one value for the set of operating parameters of the asset (105, 205, 502) based on the received operational data and the second knowledge database (148); and
executing the simulation instance in the simulation environment to simulate the behavior of the asset (105, 205, 502) based on the computed at least one value for the set of operating parameters of the asset (105, 205, 502).

6. The method according to claim 1, further comprising:
reconfiguring the second digital twin (506) of the asset (105, 205, 502) based on results of the simulation.

7. The method according to claim 6, wherein reconfiguring the second digital twin (506) of the asset (105, 205, 502) based on results of the simulation comprises:
comparing a simulated performance of the asset (105, 205, 502) from the results of the simulation model with a threshold value; and
reconfiguring the second digital twin (506) of the asset (105, 205, 502) based on the results from the simulation, if the simulated performance of the asset (105, 205, 502) is above the threshold value.

8. The method according to any of the preceding claims, wherein determining the operational configuration associated with the variant of the asset (105, 502, 502) based on the results of the simulation comprises:
identifying the at least one value for the set of operating parameters based on the reconfigured second digital twin (506); and
determining the operational configuration for the variant of the asset (105, 205, 502) using the at least one value for the set of operating parameters.

9. The method according to any of the preceding claims, further comprising:
updating the second knowledge database (148) based on the reconfigured second digital twin of the asset (506); and
augmenting the updated second knowledge database (148) to the first knowledge database (146).

10. The method according to any of the preceding claims, further comprising:
generating one or more recommendations for optimizing a performance of the asset (105, 205, 502) based on the determined operational configuration of the variant of the asset (105, 205, 502).

11. The method according to any of the preceding claims, wherein the first digital twin (504) is executed on a cloud server and the second digital twin (506) is executed on an edge server.

12. The method according to any of the preceding claims, further comprising:
generating a remaining useful life model based on the reconfigured second digital twin (506) and the second knowledge database (148).

13. An apparatus (110) for optimizing performance of an asset (105, 205, 502), the apparatus (110) comprising:
one or more processing units (155); and
a memory unit (170) communicatively coupled to the one or more processing units (155), wherein the memory unit (170) comprises a configuration determination module (175) stored in the form of machine-readable instructions executable by the one or more processing units (155), wherein the performance optimization module is configured to perform method steps according to any of the claims 1 to 12.

14. A system (100) for optimizing performance of an asset (105, 205, 502), the system 100) comprising:
one or more sources configured for providing operational data associated with the asset (105, 205, 502); and
an apparatus (110) according to claim 13, communicatively coupled to the one or more sources, wherein the apparatus (110) is configured for configuring an operational configuration of an asset (105, 205, 502), according to any of the method claims 1 to 12.

15. A computer-program product having machine-readable instructions stored therein, which when executed by one or more processing units (155), cause the processing units to perform a method according to any of the claims 1 to 12.

## Patentansprüche

1. Verfahren zum Bestimmen einer Betriebskonfiguration eines Assets (105, 205, 502), wobei sich das Asset (105, 205, 502) auf eine Vorrichtung, ein System, ein Instrument oder eine Maschine bezieht, das/die in einer Industrie oder einer anderen Anlage hergestellt oder verwendet wird, die zur Durchführung einer Operation eingesetzt wird, wobei das Verfahren Folgendes umfasst:
Empfangen eines Satzes von Betriebsparametern, die mit dem Asset (105, 205, 502) assoziiert sind, durch eine Verarbeitungseinheit (155), wobei der Satz von Betriebsparametern anfänglichen Betriebsbedingungen des Assets (105, 205, 502) entspricht;
Identifizieren von Daten, die mit dem Asset (105, 205, 502) assoziiert sind, basierend auf dem empfangenen Satz von Betriebsparametern, wobei die Daten, die mit dem Asset (105, 205, 502) assoziiert sind, in einer ersten Wissensdatenbank (146) gespeichert sind, die Informationen umfasst, die einen ersten digitalen Zwilling (504) des Assets (105, 205, 502) betreffen, wobei der erste digitale Zwilling (504) eine generische Kopie des Assets (105, 205, 502) repräsentiert, die ein normalisiertes kumulatives Modell für ein Asset (105, 205, 502) repräsentiert;
Konfigurieren eines zweiten digitalen Zwillings (506) des Assets (105, 205, 502) basierend auf den Daten, die aus der ersten Wissensdatenbank (146) identifiziert werden, wobei der zweite digitale Zwilling (506) des Assets (105, 205, 502) basierend auf den Daten, die aus der ersten Wissensdatenbank (146) identifiziert werden, von dem ersten digitalen Zwilling (504) abgeleitet wird und eine Variante des Assets (105, 205, 502) darstellt;
Simulieren eines Verhaltens des Assets (105, 205, 502) basierend auf dem konfigurierten zweiten digitalen Zwilling (506) des Assets (105, 205, 502) in einer Simulationsumgebung; und
Bestimmen der Betriebskonfiguration, die mit der Variante des Assets (105, 205, 502) assoziiert ist, basierend auf Ergebnissen der Simulation.

2. Verfahren nach Anspruch 1, wobei das Identifizieren der mit dem Asset (105, 205, 502) assoziierten Daten Folgendes umfasst:
Bestimmen einer Konfiguration aus einer Mehrzahl von vorbestimmten Konfigurationen des Assets (105, 205, 502) basierend auf dem Satz von Betriebsparametern, wobei jede vorbestimmte Konfiguration mit einer Variante des Assets (105, 205, 502) assoziiert ist.

3. Verfahren nach Anspruch 2, ferner umfassend:
Speichern der identifizierten Daten, die mit der Variante des Assets (105, 205, 502) assoziiert sind, in einer zweiten Wissensdatenbank (148), wobei die zweite Wissensdatenbank (148) kommunikativ mit der ersten Wissensdatenbank (146) gekoppelt ist.

4. Verfahren nach einem der vorhergehenden Ansprüche, wobei das Simulieren des Verhaltens des Assets (105, 205, 502) basierend auf dem zweiten digitalen Zwilling (506) in der Simulationsumgebung Folgendes umfasst:
Erzeugen einer Simulationsinstanz basierend auf dem konfigurierten digitalen Zwilling (506); und
Ausführen der Simulationsinstanz in einer Simulationsumgebung unter Verwendung eines Simulationsmodells zum Erzeugen von Simulationsergebnissen, die ein Verhalten einer oder mehrerer Komponenten des Assets (105, 205, 502) angeben.

5. Verfahren nach Anspruch 4, ferner umfassend:
Empfangen von Betriebsdaten, die das Asset (105, 205, 502) betreffen, durch eine Verarbeitungseinheit (155), wobei die Betriebsdaten eine Leistung des Assets (105, 205, 502) in Echtzeit angeben;
Berechnen mindestens eines Werts für den Satz von Betriebsparametern des Assets (105, 205, 502) basierend auf den empfangenen Betriebsdaten und der zweiten Wissensdatenbank (148); und
Ausführen der Simulationsinstanz in der Simulationsumgebung, um das Verhalten des Assets (105, 205, 502) basierend auf dem berechneten mindestens einen Wert für den Satz von Betriebsparametern des Assets (105, 205, 502) zu simulieren.

6. Verfahren nach Anspruch 1, ferner umfassend:
Rekonfigurieren des zweiten digitalen Zwillings (506) des Assets (105, 205, 502) basierend auf Ergebnissen der Simulation.

7. Verfahren nach Anspruch 6, wobei das Rekonfigurieren des zweiten digitalen Zwillings (506) des Assets (105, 205, 502) basierend auf Ergebnissen der Simulation Folgendes umfasst:
Vergleichen einer simulierten Leistung des Assets (105, 205, 502) aus den Ergebnissen des Simulationsmodells mit einem Schwellenwert; und
Rekonfigurieren des zweiten digitalen Zwillings (506) des Assets (105, 205, 502) basierend auf den Ergebnissen der Simulation, falls die simulierte Leistung des Assets (105, 205, 502) über dem Schwellenwert liegt.

8. Verfahren nach einem der vorhergehenden Ansprüche, wobei das Bestimmen der Betriebskonfiguration, die mit der Variante des Assets (105, 502, 502) assoziiert ist, basierend auf den Ergebnissen der Simulation Folgendes umfasst:
Identifizieren des mindestens einen Werts für den Satz von Betriebsparametern basierend auf dem rekonfigurierten zweiten digitalen Zwilling (506); und
Bestimmen der Betriebskonfiguration für die Variante des Assets (105, 205, 502) unter Verwendung des mindestens einen Werts für den Satz von Betriebsparametern.

9. Verfahren nach einem der vorhergehenden Ansprüche, ferner umfassend:
Aktualisieren der zweiten Wissensdatenbank (148) basierend auf dem rekonfigurierten zweiten digitalen Zwilling des Assets (506); und
Erweitern der aktualisierten zweiten Wissensdatenbank (148) auf die erste Wissensdatenbank (146).

10. Verfahren nach einem der vorhergehenden Ansprüche, ferner umfassend:
Erzeugen einer oder mehrerer Empfehlungen zum Optimieren einer Leistung des Assets (105, 205, 502) basierend auf der bestimmten Betriebskonfiguration der Variante des Assets (105, 205, 502).

11. Verfahren nach einem der vorhergehenden Ansprüche, wobei der erste digitale Zwilling (504) auf einem Cloud-Server ausgeführt wird und der zweite digitale Zwilling (506) auf einem Edge-Server ausgeführt wird.

12. Verfahren nach einem der vorhergehenden Ansprüche, ferner umfassend:
Erzeugen eines Restnutzungsdauermodells basierend auf dem rekonfigurierten zweiten digitalen Zwilling (506) und der zweiten Wissensdatenbank (148).

13. Einrichtung (110) zum Optimieren der Leistung eines Assets (105, 205, 502), wobei die Einrichtung (110) Folgendes umfasst:
eine oder mehrere Verarbeitungseinheiten (155); und
eine Speichereinheit (170), die kommunikativ mit der einen oder den mehreren Verarbeitungseinheiten (155) gekoppelt ist, wobei die Speichereinheit (170) ein Konfigurationsbestimmungsmodul (175) umfasst, das in Form von maschinenlesbaren Anweisungen gespeichert ist, die durch die eine oder die mehreren Verarbeitungseinheiten (155) ausführbar sind, wobei das Konfigurationsbestimmungsmodul dazu konfiguriert ist, die Verfahrensschritte nach einem der Ansprüche 1 bis 12 auszuführen.

14. System (100) zum Optimieren der Leistung eines Assets (105, 205, 502), wobei das System (100) Folgendes umfasst:
eine oder mehrere Quellen, die zum Bereitstellen von Betriebsdaten konfiguriert sind, die mit dem Asset assoziiert sind (105, 205, 502); und
eine Einrichtung (110) nach Anspruch 13, die kommunikativ mit der einen oder den mehreren Quellen gekoppelt ist, wobei die Einrichtung (110) dazu konfiguriert ist, eine Betriebskonfiguration eines Assets (105, 205, 502) nach einem der Verfahrensansprüche 1 bis 12 zu konfigurieren.

15. Computerprogrammprodukt mit darin gespeicherten maschinenlesbaren Anweisungen, die bei Ausführung durch eine oder mehrere Verarbeitungseinheiten (155) die Verarbeitungseinheiten veranlassen, ein Verfahren nach einem der Ansprüche 1 bis 12 durchzuführen.

## Revendications

1. Procédé de détermination d'une configuration opérationnelle d'un actif (105, 205, 502), dans lequel l'actif (105, 205, 502) fait référence à un dispositif, un système, un instrument ou une machinerie, fabriqué(e) ou utilisé(e) dans une industrie ou de toute autre installation employée pour la réalisation d'une opération, le procédé comprenant :
la réception, par une unité de traitement (155), d'un ensemble de paramètres opérationnels associés à l'actif (105, 205, 502), dans lequel l'ensemble de paramètres opérationnels correspondent à des conditions opérationnelles initiales de l'actif (105, 205, 502) ;
l'identification de données associées à l'actif (105, 205, 502) sur la base de l'ensemble reçu de paramètres opérationnels, dans lequel les données associées à l'actif (105, 205, 502) sont stockées dans une première base de données de connaissance (146) comprenant des informations concernant un premier jumeau numérique (504) de l'actif (105, 205, 502), dans lequel le premier jumeau numérique (504) représente une copie générique de l'actif (105, 205, 502) qui représente un modèle cumulatif normalisé pour un actif (105, 205, 502) ;
la configuration d'un second jumeau numérique (506) de l'actif (105, 205, 502) sur la base des données identifiées de la première base de données de connaissance (146), dans lequel le second jumeau numérique (506) de l'actif (105, 205, 502) est dérivé du premier jumeau numérique (504) sur la base des données identifiées de la première base de données de connaissance (146) et illustre une variante de l'actif (105, 205, 502) ;
la simulation d'un comportement de l'actif (105, 205, 502) sur la base du second jumeau numérique configuré (506) de l'actif (105, 205, 502) dans un environnement de simulation ; et
la détermination de la configuration opérationnelle associée à la variante de l'actif (105, 205, 502) sur la base de résultats de la simulation.

2. Procédé selon la revendication 1, dans lequel l'identification des données associées à l'actif (105, 205, 502) comprend :
la détermination d'une configuration parmi une pluralité de configurations prédéterminées de l'actif (105, 205, 502) sur la base de l'ensemble de paramètres opérationnels, dans lequel chaque configuration prédéterminée est associée à une variante de l'actif (105, 205, 502).

3. Procédé selon la revendication 2, comprenant en outre :
le stockage des données identifiées associées à la variante de l'actif (105, 205, 502) dans une seconde base de données de connaissance (148), dans lequel la seconde base de données de connaissance (148) est couplée en communication à la première base de données de connaissance (146).

4. Procédé selon de quelconques des revendications précédentes, dans lequel la simulation du comportement de l'actif (105, 205, 502) sur la base du second jumeau numérique (506) dans l'environnement de simulation comprend :
la génération d'une instance de simulation sur la base du second jumeau numérique configuré (506) ; et
l'exécution de l'instance de simulation dans un environnement de simulation en utilisant un modèle de simulation pour générer des résultats de simulation indicatifs d'un comportement d'un ou de plusieurs composants de l'actif (105, 205, 502).

5. Procédé selon la revendication 4, comprenant en outre :
la réception, par une unité de traitement (155), de données opérationnelles concernant l'actif (105, 205, 502), dans lequel les données opérationnelles sont indicatives de performances de l'actif (105, 205, 502) en temps réel ;
le calcul d'au moins une valeur pour l'ensemble de paramètres opérationnels de l'actif (105, 205, 502) sur la base des données opérationnelles reçues et de la seconde base de données de connaissance (148) ; e
l'exécution de l'instance de simulation dans l'environnement de simulation pour simuler le comportement de l'actif (105, 205, 502) sur la base de l'au moins une valeur calculée pour l'ensemble de paramètres opérationnels de l'actif (105, 205, 502).

6. Procédé selon la revendication 1, comprenant en outre :
la reconfiguration du second jumeau numérique (506) de l'actif (105, 205, 502) sur la base de résultats de la simulation.

7. Procédé selon la revendication 6, dans lequel la reconfiguration du second jumeau numérique (506) de l'actif (105, 205, 502) sur la base de résultats de la simulation comprend :
la comparaison de performances simulées de l'actif (105, 205, 502) provenant des résultats du modèle de simulation à une valeur seuil ; et
la reconfiguration du second jumeau numérique (506) de l'actif (105, 205, 502) sur la base des résultats de la simulation, si les performances simulées de l'actif (105, 205, 502) sont supérieures à la valeur seuil.

8. Procédé selon de quelconques des revendications précédentes, dans lequel la détermination de la configuration opérationnelle associée à la variante de l'actif (105, 502, 502) sur la base des résultats de la simulation comprend :
l'identification de l'au moins une valeur pour l'ensemble de paramètres opérationnels sur la base du second jumeau numérique reconfiguré (506) ; et
la détermination de la configuration opérationnelle pour la variante de l'actif (105, 205, 502) en utilisant l'au moins une valeur pour l'ensemble de paramètres opérationnels.

9. Procédé selon de quelconques des revendications précédentes, comprenant en outre :
la mise à jour de la seconde base de données de connaissance (148) sur la base du second jumeau numérique de l'actif reconfiguré (506) ; et
l'augmentation de la seconde base de données de connaissance mise à jour (148) à la première base de données de connaissance (146).

10. Procédé selon de quelconques des revendications précédentes, comprenant en outre :
la génération d'une ou de plusieurs recommandations pour optimiser des performances de l'actif (105, 205, 502) sur la base de la configuration opérationnelle déterminée de la variante de l'actif (105, 205, 502).

11. Procédé selon de quelconques des revendications précédentes, dans lequel le premier jumeau numérique (504) est exécuté sur un serveur en nuage et le second jumeau numérique (506) est exécuté sur un serveur en périphérie.

12. Procédé selon de quelconques des revendications précédentes, comprenant en outre :
la génération d'un modèle de vie utile restante sur la base du second jumeau numérique reconfiguré (506) et de la seconde base de données de connaissance (148).

13. Appareil (110) pour optimiser des performances d'un actif (105, 205, 502), l'appareil (110) comprenant :
une ou plusieurs unités de traitement (155) ; et
une unité de mémoire (170) couplée en communication à l'une ou aux plusieurs unités de traitement (155), dans lequel l'unité de mémoire (170) comprend un module de détermination de configuration (175) stocké sous la forme d'instructions lisibles par machine exécutables par l'une ou les plusieurs unités de traitement (155), dans lequel le module d'optimisation de performances est configuré pour réaliser des étapes de procédé selon de quelconques des revendications 1 à 12.

14. Système (100) pour optimiser les performances d'un actif (105, 205, 502), le système 100) comprenant :
une ou plusieurs sources configurées pour fournir des données opérationnelles associées à l'actif (105, 205, 502) ; et
un appareil (110) selon la revendication 13, couplée en communication à l'une ou aux plusieurs sources, dans lequel l'appareil (110) est configuré pour configurer une configuration opérationnelle d'un actif (105, 205, 502), selon de quelconques des revendications de procédé 1 à 12.

15. Produit-programme d'ordinateur ayant des instructions lisibles par machine stockées dans celui-ci, qui lorsqu'elles sont exécutées par une ou plusieurs unités de traitement (155), amènent les unités de traitement à réaliser un procédé selon de quelconque des revendications 1 à 12.
